# EUROPÄISCHE PATENTSCHRIFT

(11) **EP 2 188 180 B1**
(45) Veröffentlichungstag und Bekanntmachung des Hinweises auf die Patenterteilung: **01.01.2014**
(21) Anmeldenummer: 08804109.0
(22) Anmeldetag: 12.09.2008
(51) Int. Cl.: B64G 1/40, F03H 1/00, H05H 1/54

(54) **ANTRIEBSANORDNUNG IN EINEM RAUMFLUGKÖRPER**
DRIVE ARRANGEMENT IN A SPACECRAFT
DISPOSITIF D'ENTRAINEMENT SITUE DANS UN VEHICULE SPATIAL

(30) Priorität: 14.09.2007 DE 102007044071
(43) Veröffentlichungstag der Anmeldung: 26.05.2010
(73) Patentinhaber: Thales Electronic Systems GmbH, 89077 Ulm (DE)
(72) Erfinder: HARMANN, Hans-Peter, 89077 Ulm (DE); KOCH, Norbert, 89073 Ulm (DE); KORNFELD, Günter, 89275 Elchingen (DE)
(74) Vertreter: Baur & Weber Patentanwälte
(86) Internationale Anmeldenummer: PCT/EP2008/062144
(87) Internationale Veröffentlichungsnummer: WO 2009/037196

(56) Entgegenhaltungen:
- EP-A- 0 890 739
- GB-A- 2 262 777
- US-A1- 2005 005 593
- US-B1- 6 173 565
- US-B1- 6 518 693

## Beschreibung

Die Erfindung betrifft eine Antriebsanordnung in einem Raumflugkörper.

Für Antriebsanordnungen in Raumflugkörpern wie insbesondere Satelliten oder Raumsonden sind neben chemischen Antrieben auch elektrische Antriebe bekannt. Letztere benutzen insbesondere eine Hochspannung, um positiv geladene Ionen eines in einer Ionisationskammer ionisierten Arbeitsgases zu beschleunigen und als Plasmastrahl durch eine Öffnung der Ionisationskammer auszustoßen. Nach dem Rückstoßprinzip wird dabei der Raumflugkörper in die entgegen gesetzte Richtung beschleunigt. Als Arbeitsgas dient vorzugsweise ein Edelgas, wie insbesondere Xenon.

Um einen Raumflugkörper in verschiedene Fluglagen zu bringen und Beschleunigungskräfte in verschiedene Richtungen ausüben zu können, sind mehrere Antriebseinheiten, insbesondere mit unterschiedlicher und/oder verstellbarer Ausrichtung vorgesehen. Da eine ausgefallene Antriebseinheit in einem Raumflugkörper typischerweise nicht repariert oder ausgetauscht werden kann, sind in der Regel zusätzliche Antriebseinheiten in dem Raumflugkörper angeordnet.

Die Erzeugung von Antriebsleistung solcher elektrischer Antriebe erfolgt durch Zuführen von neutralem Arbeitsgas in die Ionisationskammer, Ionisation des Arbeitsgases und elektrostatische Beschleunigung positiv geladener Gasionen, welche als beschleunigter Plasmastrahl aus einer Strahlaustrittsöffnung ausgestoßen werden. Eine Variation der Antriebsleistung kann durch Variation der Hochspannung, im einfachsten Fall durch Ein- und Ausschalten der Hochspannung erfolgen. Um die einzelnen Antriebseinheiten unabhängig voneinander steuern zu können, ist dabei das dieser Antriebseinheit zugeordnete Hochspannungspotential einer Hochspannungsversorgungseinrichtung durch eine Steuereinheit zu steuern. Eine solche Hochspannungsversorgungseinrichtung umfasst dabei typischerweise mehrere Hochspannungsgeneratoren. Da diese teuer sind und das Gewicht des Raumflugkörpers erhöhen, ist es erstrebenswert, die Anzahl der Hochspannungsgeneratoren möglichst gering zu halten, wobei aber auch bei den Hochspannungsgeneratoren Vorsorge für den Ausfall eines Hochspannungsgenerators getroffen werden muss, weshalb in dem Raumflugkörper noch ein oder typischerweise mehrere Reserve-Hochspannungsgeneratoren vorgesehen sind.

Aus der EP 0 550 250 B1 ist ein Antriebssystem für Raumflugkörper bekannt, bei welchem mehrere elektrostatische Gitter-Triebwerke aus einer gemeinsamen Energieversorgung gespeist sind. Dabei sind jedem Triebwerk eigene Hochspannungsgeneratoren für verschiedene benötigte Hochspannungen zugeordnet. Die Hochspannungsgeneratoren sind gleichzeitig mit Energie versorgt und die Hochspannungen liegen gleichzeitig an allen Triebwerken an. Ein einzelnes Triebwerk kann durch Öffnen eines zugeordneten Gasventils mit Arbeitsgas versorgt und auf diese Weise selektiv aktiviert werden. Kathodenheizungen von Primärelektronenquellen können über Schalter selektiv ein- oder ausgeschaltet werden. Ein vergleichbares System ist aus der EP 0 890 739 B1 bekannt.

Um insbesondere bei einer größeren Anzahl von unabhängig voneinander zu steuernden Antriebseinheiten nicht für jede Antriebseinheit einen eigenen Hochspannungsgenerator und einen Ersatzgenerator bereitstellen zu müssen, können eine erste Anzahl von Hochspannungsgeneratoren und eine zweite Anzahl von Antriebseinheiten über eine Schaltmatrix mit elektrischen Schaltern verbunden sein. Eine für ein Manöver des Raumflugkörpers benötigte Antriebseinheit wird mit einem aktuell nicht für eine andere Antriebseinheit benötigten Hochspannungsgenerator über die Schaltmatrix verbunden. Eine Umschaltung einer Matrixverbindung ist aber wegen der Belastung der elektronischen Matrix-Schaltelemente nur bei ausgeschalteter Hochspannung zulässig. Solche Matrix-Schaltelemente fallen häufig aus, was zu Funktionseinschränkungen bei der Steuerung des Raumflugkörpers führt. Durch redundant vorgesehene und angeordnete Schaltelemente wird die Komplexität der Anordnung weiter erhöht.

Die EP 0 890 739 A1 stellt den nächstliegenden Stand der Technik dar und offenbart den Oberbegriff des Anspruchs 1. Sie beschreibt zudem eine Antriebsanordnung für Raumflugkörper, bei welcher mehrere elektrostatische Antriebseinheiten an ein gemeinsames Hochspannungspotential angeschlossen sind. Die als Gittertriebwerke ausgeführten Antriebseinheiten weisen jeweils eine eigene Heizeinrichtung auf und sind mit einem Arbeitsgas mit für die einzelnen Antriebseinheiten selektiv steuerbarem Gasfluss aus einem gemeinsamen Gasvorrat versorgbar. In der US 6 518 693 B1 ist ein Verfahren und eine Anordnung zur Spannungsisolation einzelner Anoden von mehreren an einen gemeinsamen Hochspannungspotential liegenden elek-trostatischen Antriebseinheiten beschrieben. Hierfür enthält jede der Antriebseinheiten eine Spulenanordnung, mittels welcher in der Nähe der jeweiligen Anode ein Magnetfeld erzeugbar ist, welches den Leckstrom einer inaktiven Anode reduziert.

Der vorliegenden Erfindung liegt die Aufgabe zugrunde, eine einfache und wenig störanfällige Antriebsanordnung in einem Raumflugkörper anzugeben. Dies wird durch eine Antriebsanordnung gemäß Anspruch 1 gelöst.

Die Verlagerung der veränderlichen Steuerung einer Antriebseinheit von der Beeinflussung der Hochspannung zu einer Beeinflussung der Erzeugung von Plasma und die gleichzeitige Versorgung mehrerer Antriebseinheiten aus einem gemeinsamen Hochspannungspotential einer Hochspannungsversorgungseinrichtung erbringt erhebliche Vorteile bei der veränderlichen Steuerung und den Aufbau der gesamten Anordnung. Insbesondere kann in vielen Anwendungen die Anzahl der Hochspannungsgeneratoren in der Hochspannungsversorgungseinrichtung deutlich reduziert und damit die Kosten und Gewicht eingespart werden. Insbesondere können auch alle oder zumindest alle aktiven Antriebseinheiten der Antriebsanordnung aus einem gemeinsamen Hochspannungspotential versorgt sein. Im Unterschied zum Stand der Technik nach der EP 0 550 250 B1 wird nur ein Hochspannungsgenerator für mehrere Antriebseinheiten benötigt und der Ausgang des einen Hochspannungsgenerators bildet das gemeinsame Hochspannungspotential, welches auf die Hochspannungselektroden der mehreren Antriebseinheiten verzweigt wird. Der Hochspannungsgenerator kann mehrere Generatorstufen in paralleler Anordnung enthalten, welche aber jeweils ein für alle Antriebseinheiten gemeinsames Hochspannungspotential am Ausgang des gemeinsamen Hochspannungsgenerators erzeugen.

Die veränderliche Steuerung durch Beeinflussung der Erzeugung von Plasma umfasst insbesondere die Rate mit welcher Plasma neu erzeugt wird. Hierzu kann bei Hochfrequenz-Triebwerken als Antriebseinheiten durch Schalten oder Verändern des die Ionisation bewirkenden Hochfrequenzfeldes in der lonisationskammer die Ionisationsrate veränderlich beeinflusst sein. In besonders vorteilhafter Ausführung erfolgt die veränderliche Steuerung der Antriebsleistung einer Antriebseinheit durch veränderliche Steuerung des Gasflusses in die Ionisationskammer der Antriebseinheit, wobei unter Gasfluss die je Zeiteinheit in die lonisationskammer eingeleitete Gasmenge verstanden wird. Ein höherer Gasfluss führt zu einer höheren Rate der Erzeugung von Ionen bzw. Plasma. Vorteilhafterweise kann dabei der Wert der Hochspannung konstant sein.

Die veränderbare Steuerung des Gasflusses erfolgt vorteilhafterweise durch den jeweiligen Antriebseinheiten einzeln vorgeschaltete steuerbare Gasventile. Die Gasventile können in einer ersten vorteilhaften Ausführung als Dosierventile den Gasfluss zumindest über einen Gasflussbereich unter der Einwirkung der Steuereinrichtung kontinuierlich verändern. In anderer vorteilhafter Ausführung können die Gasventile als durch einfachen und störunauffälligen Aufbau besonders günstige Schaltventile ausgeführt sein, welche nur zwischen einem geschlossenen und einem offenen Zustand umschaltbar sind. Eine solche Umschaltung führt zu Betriebszuständen der Antriebseinheit zwischen einem Leerlaufzustand ohne Arbeitsgas in der Ionisationskammer und einem Antriebszustand mit gleichbleibender maximaler Antriebsleistung. Dies ist insbesondere von Vorteil, wenn die Antriebseinheit einen bestimmten, z. B. bezüglich dem Verhältnis von Antriebsschubleistung zu Gasfluss besonders günstigen Arbeitspunkt besitzt.

Durch getakteten Betrieb kann eine gemittelte Antriebsleistung eingestellt werden, welche zwischen dem Leerlaufzustand und der maximalen Antriebsleistung liegt. Hierbei ist eine konstant anliegende Hochspannung während der Taktung des Gasflusses von besonderem Vorteil, da Umschaltungen der Hochspannungen vermieden werden.

Zur Einstellung eines Werts des Gasflusses zwischen einem maximalen Gasfluss und geschlossener Gaszuführung kann in vorteilhafter Ausführung die Steuereinrichtung einen getakteten Betrieb eines Gasflluss-Schaftventils vorgegeben und ein Gasflusswiderstand in der Zuführung zwischen Gasventil und Ionisationskammer angeordnet sein, welcher den entsprechend dem Taktbetrieb des Ventils stoßweise auftretenden Gasfluss vor der Ionisationskammer glättet und in einen Gasstrom mit geringerem Modulationshub um einen zwischen den ungeglätteten umgeschalteten Zuständen umwandelt. Ein solcher Flusswiderstand kann beispielsweise eine Düse oder eine Umwegleitung sein. In bevorzugter Ausführung ist der Flusswiderstand durch einen gasdurchlässigen offenporigen Körper, insbesondere aus einem keramischen Material gebildet. Ein Zwischenwert des Gasflusses zwischen Leerlauf und maximalem Gasfluss kann auch durch den Einsatz von zwei oder mehr Schaltventilen in der Gaszuführung zu einer Antriebseinheit eingestellt werden, welche im Gasstrom parallel angeordnet und einzeln schaltbar sind und in den von ihnen bewirkten Teil-Gasflüssen unterschiedlich, beispielsweise binär gestuft sein können. Die Gasventile sind vorteilhafterweise in unmittelbarer Nähe der Antriebseinheiten angeordnet. Vorteilhafterweise ist die einzelne Antriebseinheit in einem Leerlaufzustand, d. h. ohne Gaszufuhr, in ihrem Hochspannungskreis zwischen einer Katodenelektrode über die Ionisationskammer zu einer Anodenelektrode hochohmig mit einem Widerstand von mehr als 100 kOhm.

Von besonderem Vorteil ist, dass auch eine für ein Manöver nicht benötigte Antriebseinheit mit derselben Hochspannung wie aktivierte Antriebseinheiten beaufschlagt ist und zum Einschalten der Antriebsleistung ohne eine Veränderung im elektrischen System das Aktivieren einer Antriebseinheit allein durch Zuführen von Arbeitsgas in die Ionisationskammer und erforderlichenfalls Einschalten eines Neutralisators erfolgen kann. Eine Ionisation und Plasmaerzeugung in der auch im Leerlauf von dem elektrostatischen Feld der mit der Hochspannung beaufschlagten Elektrodenanordnung durchsetzten lonisationskammer beginnt mit Vorliegen von Arbeitsgas in der lonisationskammer. Ein Abschalten einer Antriebseinheit kann einfach durch Abschalten des Gaszustroms ohne Abschalten der Hochspannung erfolgen. Die Hochspannung liegt weiter an der abgeschalteten Antriebseinheit an, so dass keine Abschaltung oder Umschaltung in Hochspannungsstromkreis erforderlich ist und der Hochspannungsstromkreis frei von Schaltelementen, insbesondere frei von den einzelnen Antriebseinheiten zugeordneten Schaltelementen ausgeführt sein kann. Während längerer Stillstandszeiten aller aus demselben Hochspannungspotential versorgten Antriebseinheiten kann der Hochspannungsgenerator auch abgeschaltet werden.

Von besonderem Vorteil ist ein an sich aus der WO03/000550 A1 bekannter Aufbau eines Ionenbeschleunigers, bei welchem eine Magnetanordnung in einer Ionisationskammer ein Magnetfeld erzeugt, welches in Längsrichtung beabstandet wenigstens zwei Cusp-Strukturen aufweist. Die Magnetanordnung umfasst mehrere in Längsrichtung aufeinander folgende und alternierend entgegen gesetzt gepolte Magnetringe. Eine Kathodenelektrode ist im Bereich der Strahlaustrittsöffnung der Ionisationskammer, vorzugsweise außerhalb der Kammer gegen die Strahlaustrittsöffnung seitlich versetzt angeordnet und eine Anodenelektrode ist in Längsrichtung der Strahlaustrittsöffnung entgegen gesetzt am Fuß der Kammer angeordnet. Von der Kathode emittierte und durch das elektrostatische Feld zwischen Kathode und Anode in Richtung der Anode beschleunigte Elektronen verweilen lange in den Cusp-Strukturen, so dass der zwischen Kathode und Anode im Leerlaufbetrieb fließende Strom und damit auch die Leerlauf-Leistungsaufnahme der Antriebseinheit gering ist, insbesondere auch wesentlich geringer als bei Hall-Ionentriebwerken.

Ein Ionenbeschleuniger dieser Bauart hat ferner gegenüber den aus den eingangs genanntenEP 0 550 250 B1 und EP 0 890 739 B1 bekannten Gitter-Triebwerken den Vorteil, dass Spannungsüberschläge, bei den Gitter-Triebwerken zwischen benachbarten Gittern als flame-out bekannt und häufig auftretend, nicht vorkommen, so dass durch den Beterieb eines oder mehrerer Antriebseinheiten entstehende Veränderungen des Hochspannungspotentials gering bleiben. Ionenbeschleuniger dieser Bauart haben ferner den besonderen Vorteil, dass nur eine Hochspannung, nämlich zwischen Kathode und Anode benötigt wird, und diese Hochspannung für verschiedene Strömungsraten des Arbeitsgases gleich gehalten werden kann, wogegen Gitter-Triebwerke typischerweise eine Abstimmung zwischen Gasflussrate und Hochspannung erfordern.

Vorteilhafterweise sind mehrere Antriebseinheiten, insbesondere mehrere aus einem gemeinsamen Hochspannungspotential der Hochspannungsversorgungseinrichtung gleichzeitig versorgte Antriebseinheiten in unterschiedlicher Ausrichtung an dem Raumflugkörper angeordnet. Da vorteilhafterweise auch gleichzeitig mehrere Antriebseinheiten Antriebsleistung mit unterschiedlichen Schubvektoren und mit einzeln steuerbarer Antriebsleistung, z. B. nach einer der beschriebenen Arten, erbringen können, kann die Steuereinrichtung durch die veränderbare Steuerung der Antriebsleistung der einzelnen Antriebseinheiten einen resultierenden Schubvektor weitgehend beliebig in Zwischenrichtungen zwischen den Ausrichtungen der einzelnen Antriebseinheiten einstellen. Hierbei brauchen nur die mit vergleichsweise kleinen Spannungen und Strömen beaufschlagten Gasventile angesteuert werden, wogegen die Hochspannung konstant und ständig mit dem den Antriebseinheiten verbunden ist.

Um bei Störungen des aus einem Hochspannungsgenerator und mehreren Antriebseinheiten bestehenden Antriebssystems eine Manövrierbarkeit des Raumflugkörpers zu erhalten, können Komponenten redundant vorgesehen sein. In einer ersten Ausführung kann der Hochspannungsgenerator wenigstens zwei elektrisch parallel liegende Generatorstufen enthalten, welche auf einen gemeinsamen Hochspannungsausgang des Hochspannungsgenerators geschaltet sind, wobei eine solche Anschaltung an den gemeinsamen Hochspannungsausgang vorteilhafterweise schalterfrei über Rückwirkungssperren, insbesondere Dioden erfolgt. Die parallelen Generatorstufen können vorteilhafterweise je nach Belastung einzeln oder beide gleichzeitig aktivierbar sein. In vorteilhafter Weiterbildung kann ein zweiter Hochspannungsgenerator vorgesehen sein, welcher bei einer Störung des ersten Hochspannungsgenerators mittels zentralen, dem Netzwerk von untereinander dauerhaft elektrisch verbundenen Verteilerleitungen vorteilhafterweise vorgeschalteten Schaltmitteln anstelle des ersten Hochspannungsgenerators mit dem Netz der Hochspannungszuleitungen verbunden wird. Eine solche einmalige Umschaltung erfolgt vorteilhafterweise bei abgeschalteten Hochspannungsgeneratoren. In anderer vorteilhafter Ausführung wird als Redundanz für den Störungsfall oder als Unterstützung für ein Antriebssystem mit einem ersten Hochspannungsgenerator und mehreren aus diesem gespeisten Antriebseinheiten ein zweites Antriebssystem mit einem zweiten Hochspannungsgenerator und mit nur aus diesem mit Hochspannung versorgten mehreren Antriebseinheiten vorgesehen. Hierdurch können vorteilhafterweise störanfällige Schaltelemente in Hochspannungsstromkreisen vollständig vermieden werden.

Für den Betrieb der als Elektronenquelle für die Ionisation, insbesondere aber die Neutralisation des lonenstrahls dienenden Neutralisatoren sind verschiedene Verschaltungen und Anordnungen aus dem genannten Stand der Technik bekannt, welche weitgehend beliebig mit der dem Hochspannungsteil betreffenden vorliegenden Erfindung kombiniert werden können.

Die Erfindung ist nachfolgend anhand bevorzugter Ausführungsbeispiele unter Bezugnahme auf die Abbildungen noch eingehend veranschaulicht. Dabei zeigt:
- Fig. 1: eine schematische Anordnung mehrerer Antriebseinheiten, in einem Raumflugkörper,
- Fig. 2: einen bevorzugten Aufbau einer Antriebseinheit,
- Fig. 3: eine Antriebseinheit mit Schaltventil,
- Fig. 4: einen Hochspannungsgenerator mit parallelen Generatorstufen.

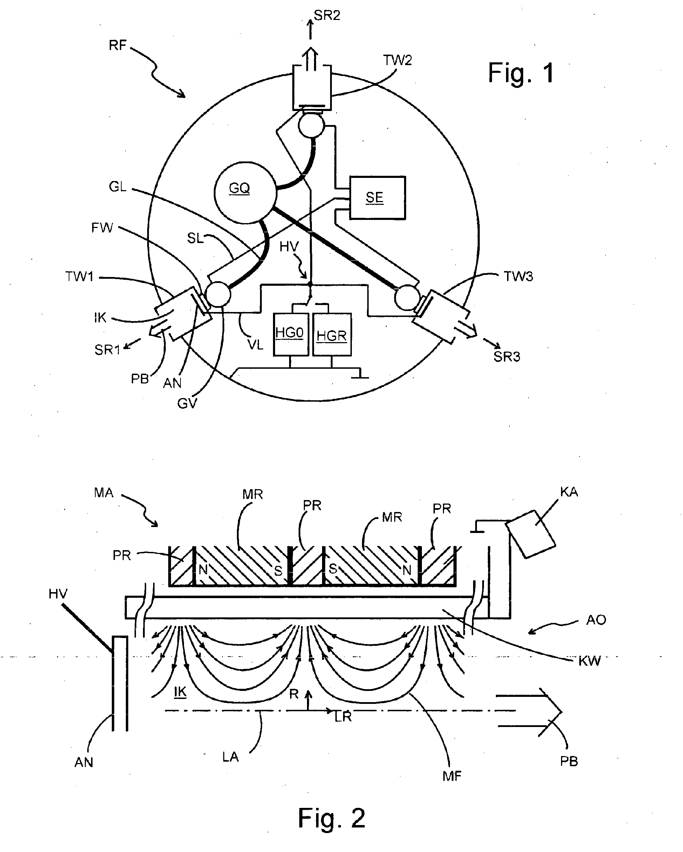

In Fig. 1 ist schematisch eine Zusammenstellung der für die Erläuterung der Erfindung und deren Weiterbildungen bedeutsamen Komponenten eines angedeuteten Raumflugkörpers RF skizziert. An dem Raumflugkörper seien mehrere Antriebseinheiten TW1, TW2, TW3 angeordnet, welche als lonenbeschleunigeranordnungen ausgeführt sind und jeweils einen Plasmastrahl PB zur Erzeugung eines Antriebsschubs ausstoßen können. Die einzelnen Antriebseinrichtungen TW1, TW2, TW3 seien unterschiedlich ausgerichtet mit Strahlrichtungen SR1, SR2 und SR3. Die Strahlrichtungen der einzelnen Antriebsanordnungen können auch noch durch schwenkbare Lagerung der Antriebseinheiten veränderbar sein. Jede Antriebseinheit umfasst eine lonisationskammer IK, in welcher ein zugeführtes Arbeitsgas ionisiert und elektrostatisch beschleunigt und als Plasmastrahl PB durch einen Strahtaustrittsöffnung ausgestoßen wird. Der Strahlaustrittsöffnung in jeweiliger Strahlrichtung entgegen gesetzt ist jeweils eine Anodenanordnung AN beim Fuß der jeweiligen lonisationskammer angeordnet.

Eine Hochspannungsversorgungseinrichtung enthält einen ersten Hochspannungsgenerator HG0 und einen Reserve-Hochspannungsgenerator HGR, welche zur Erzeugung einer Hochspannung HV gegen Massepotential M des Raumflugkörpers ausgebildet sind. Über eine Umschalteinrichtung kann zwischen den beiden Hochspannungsgeneratoren umgeschaltet werden. In der Skizze ist der Hochspannungsgenerator HG0 als aktiver, die Hochspannung HV liefernder Generator an ein System von Hochspannungs-Versorgungsleitungen VL angeschlossen, über welche die Anodenanordnungen AN der einzelnen Ionenbeschleunigeranordnungen ständig mit dem Hochspannungsgenerator verbunden sind und auf Hochspannung gegenüber dem Massepotential liegen.

In anderer, nicht skizzierter vorteilhafter Ausführung kann der Hochspannungsgenerator HG0 ohne Schaltmittel dauerhaft über die Hochspannungsleitungen VL mit den Antriebseinheiten TW1, TW2, TW3 verbunden und ein zweites Antriebssystem mit einem weiteren Hochspannungsgenerator und ohne Schaltelemente dauerhaft über eigene Verbindungsleitungen mit diesem verbundenen weiteren Antriebseinheiten vorgesehen sein. Die Hochspannungsstromkreise der beiden Antriebssysteme sind auch bei gemeinsamem Massepotential voneinander unabhängig. Die Gasversorgung beider Antriebssysteme kann aus einem gemeinsamen Gasvorratsbehälter erfolgen. Die beiden Antriebssyteme können alternativ oder auch gemeinsam betreibbar sein. Insbesondere können sich die beiden Antriebssysteme bei Ausfall einzelner Antriebseinheiten auch vorteilhaft ergänzen.

Von einem Gasvorratsbehälter GQ führen Gaszuleitungen GL zu Gasventilen GV, welche jeweils individuell einzelnen Ionenbeschleunigeranordnungen TW1, TW2, TW3 zugeordnet sind. Die einzelnen Gasventile GV sind von einer Steuereinrichtung SE über Steuerleitungen SL individuell ansteuerbar.

Der Übersichtlichkeit halber sind die genannten einzelnen Komponenten nur zu der Ionenbeschleunigeranordnung TW1 im einzelnen bezeichnet. Die Bezeichnungen sind in analoger Weise auf die den anderen lonenbeschleunigeranordnungen TW2, TW3 zugeordneten Komponenten übertragbar.

Durch die gleichzeitig an allen Anodenanordnungen AN anliegende Hochspannung und die individuelle Steuerbarkeit des Gasflusses durch die einzelnen Gasventile GV in die lonisationskammer der einzelnen lonenbeschleunigeranordnungen können die Ionenbeschleunigeranordnungen sowohl einzeln als auch zu mehreren gleichzeitig einen Antriebsschub entgegen ihrer jeweiligen Strahlrichtung liefern. Die Anzahl der Antriebseinheiten und deren Ausrichtung sei im skizzierten Beispiel lediglich symbolisch verstanden, um zu veranschaulichen, dass mehrere Antriebseinheiten in unterschiedlicher Ausrichtung vorgesehen sein können. Im Realfall ist selbstverständlich zu beachten, dass der Raumflugkörper in drei Dimensionen lateral steuerbar und außerdem durch Drehbewegungen in seiner Ausrichtung veränderbar sein muss. Um eine Schubkraft entgegen der Strahlrichtung einer Antriebseinheit zu erzeugen, genügt eine Schuberzeugung in dieser Antriebseinheit. Für einen Antriebsschub in einer Kraftrichtung, welche nicht genau der Strahlrichtung einer Antriebseinheit entgegen gerichtet ist, können mehrere Antriebseinheiten gleichzeitig oder, beispielsweise bei Taktung, quasi gleichzeitig betrieben sein und jeweils einen eigenen Antriebsschub liefern, wobei die Antriebsschübe der beteiligten Antriebseinheiten auch unterschiedlich sein können, so dass der resultierende Schubvektor auf weitgehend beliebige Richtungen eingestellt werden kann. Die Einstellung der Richtung und Stärke eines solchen resultierenden Antriebsschubs erfolgt durch die Steuereinrichtung mit dem jeweils erforderlichen Antriebsschub entsprechend gepaßten, gegebenenfalls getakteten Betätigungssignalen für die Gasventile.

Die Gasventile sind vorteilhafterweise in unmittelbarer Nähe der Antriebseinheiten angeordnet. Zwischen Gasventil und Ionisationskammer einer Antriebseinheit kann noch eine Gasflusswiderstandsanordnung FW eingefügt werden, welche bei getaktetem Betrieb eines Gasventils die durch die Taktung entstehende Modulation des Gasflusses verringert und den Gasfluss vergleichmäßigt. Der Flusswiderstand einer solchen Einrichtung FW ist vorteilhafterweise größer, insbesondere doppelt so groß wie der kumulierte Flusswiderstand der übrigen Baugruppen im Gasstrom vom Eingang des Gasventils bis in die lonisationskammer.

Fig. 2 zeigt einen bevorzugten, an sich bekannten Aufbau einer Antriebseinheit als Ionenbeschleunigeranordnung, wie er in seiner grundsätzlichen Funktionsweise auch in der WO03/000550A1 bereits beschrieben ist. Fig. 2 zeigt dabei ein Schnittbild durch die Ionenbeschleunigeranordnung mit einer durch eine Mittellängsachse LA der Ionisationskammer IK gehenden Schnittebene. Die Ionenbeschleunigeranordnung sei als im wesentlichen rotationssymmetrisch angenommen und in Fig. 2 ist daher lediglich eine auf einer Seite der Mittellängsachse LA liegende Hälfte der Ionenbeschleunigeranordnung skizziert.

Die skizzierte Ionenbeschleunigeranordnung besitzt eine durch eine Kammerwand KW seitlich begrenzte Ionisationskammer IK um die Mittellängsachse LA.

Die Ionisationskammer ist in einer Längsrichtung LR nach einer Seite offen.

Durch die dort gegebenen Strahlaustrittsöffnung AO wird im Betrieb der lonenbeschleunigeranordnung, d. h. bei Zuführung von Arbeitsgas in die lonisationskammer ein beschleunigter Plasmastrahl PB in Längsrichtung LR ausgestoßen. Außerhalb der Ionisationskammer und seitlich gegen die Strahlaustrittsöffnung AO versetzt ist eine Kathode KA angeordnet. Der Strahlaustrittsöffnung AO in Längsrichtung LR entgegen gesetzt ist eine Anodenanordnung AN am Fuß der Ionisationskammer angeordnet. Zwischen der Kathode KA und der Anodenanordnung AN liegt eine Hochspannung HV, wobei typischerweise die Kathode auf dem Massepotential M des Raumflugkörpers liegt.

In radialer Richtung R auf der der Ionisationskammer IK abgewandten Seite der Kammerwand ist eine die Ionisationskammer umgebende Magnetanordnung MA vorgesehen, welche insbesondere in Längsrichtung LR mehrstufig ist und wenigstens zwei in Längsrichtung voneinander beabstandete Magnetringe MR enthält, deren Magnetpole S, N in Längsrichtung entgegen gesetzt sind, wobei die Ausrichtung von in Längsrichtung benachbarten Magnetringen entgegengesetzt ist, so dass sich gleichsinnige Pole, in der Skizze zwei Südpole S benachbarter Magnetringe gegenüber stehen. Zwischen den Magnetringen MR und/oder in Längsrichtung seitlich neben diesen sind vorteilhafterweise weichmagnetische Polschuhringe PR angeordnet. Der Aufbau einer solchen Magnetanordnung ist aus dem genannten Stand der Technik an sich bekannt. Die Magnetanordnung erzeugt in der Plasmakammer ein Magnetfeld MF, welches in Längsrichtung beabstandet wenigstens zwei Cusp-Strukturen besitzt. In diesen Cusp-Strukturen verlaufen die Magnetfeldlinien von der Längsachse LA her gekrümmt in Richtung auf die Kammerwand bzw. durch diese hindurch auf die Polschuhe PR zu, wobei sich ein hoher Feldgradient ergibt. Derartige Ionenbeschleunigeranordnungen sind bereits mehrfach unter der Bezeichnung HEMP in der Literatur beschrieben. Von besonderem Vorteil ist eine lonenbeschleunigeranordnung auch dadurch, dass diese in einem Leerlaufzustand mit anliegender Hochspannung, aber ohne Gaszufluss in die Ionisationskammer in ihrem Hochspannungskreis sehr hochohmig ist, insbesondere mit einem Widerstand von mehr als 1 MOhm, so dass der Strom zwischen Kathode und Anode bei einem typischen Hochspannungswert von 1 kV unter 1 mA bleibt.

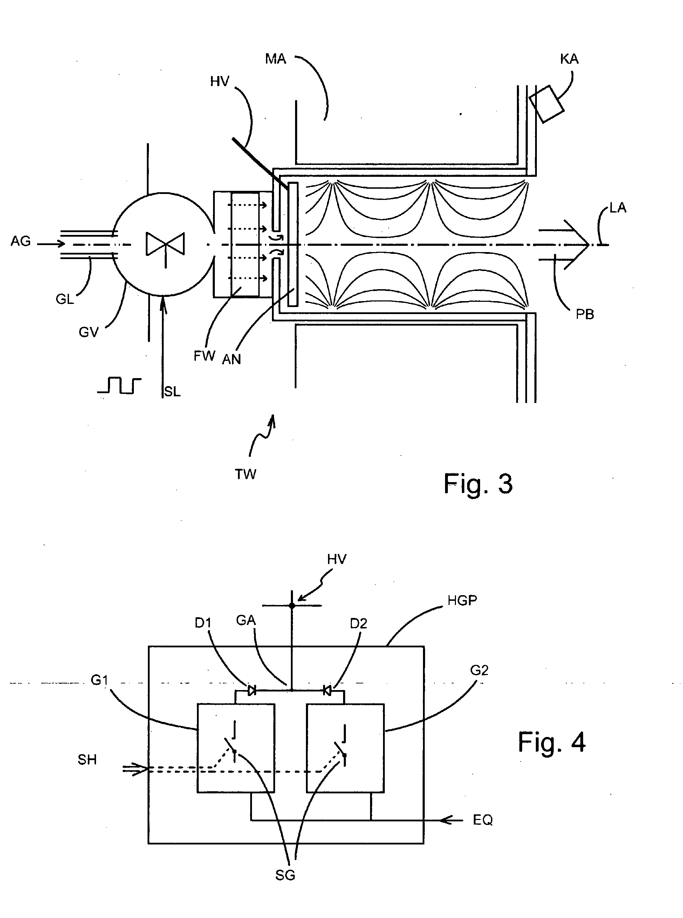

Fig. 3 zeigt eine Antriebseinheit insbesondere der in Fig. 2 detaillierter dargestellten Art mit einem Gasventil GV, welches insbesondere als schaltbares Ventil ausgeführt sein kann. Dem Gasventil GV ist über eine Gaszuführung GL Arbeitsgas AG aus der Gasquelle GQ zugeführt. Als Arbeitsgas kann insbesondere ein schweres Edelgas wie Xenon dienen.

Das Gasventil ist über eine Steuerleitung SL von der Steuereinrichtung SE angesteuert und öffnet und schließt nach Maßgabe des Steuersignals auf der Steuerleitung. Das Steuersignal kann insbesondere auch ein getaktetes Schaltsignal sein.

Am Ausgang des Gasventils GV tritt ein entsprechend dem Steuersignal auf der Steuerleitung SL modulierter Gasstrom auf. Ein Flusswiderstandskörper als Flusswiderstandseinrichtung FW mit einem gegenüber dem geöffneten Gasventil und dem übrigen Strömungspfad bis zur Ionisationskammer größeren Flusswiderstand kann die Modulation des modulierten Gasflusses glätten. Der Flusswiderstandskörper FW kann beispielsweise durch einen offenporigen Körper, insbesondere einen offenporigen Keramikkörper gebildet sein.

Das den Flusswiderstandskörper in Flussrichtung verlassende Arbeitsgas strömt bei der skizzierten Anordnung durch eine Blende an eine der lonisationskammer IK abgewandten Rückseite der Anodenanordnung AN und seitlich an dieser vorbei in die Ionisationskammer.

Sobald Arbeitsgas in die Ionisationskammer eintritt setzt dort der lonisationsvorgang und die Bildung eines Plasmas ein und die Antriebseinheit TW erzeugt durch Ausstoßen eines Plasmastrahls PB einen Antriebsschub.

Fig. 4 zeigt schematisch einen Hochspannungsgenerator HGP, in welchem zwei Generatorstufen GS1, GS2 in elektrischer Parallelschaltung vorgesehen sind. Die beiden Generatorstufen sind aus einer gemeinsamen Energiequelle EQ, die nicht mit eingezeichnet ist, mit elektrischer Energie versorgt. Die von den beiden Generatorstufen erzeugten Hochspannungsleisstungen sind über Diodenanordnungen D1, D2 als Rückwirkungssperren auf einen gemeinsamen Ausgang GA geführt und erzeugen dort ein für mehrere Antriebseinrichtungen gemeinsames Hochspannungspotential HV. Die beiden Generatorstufen können über Steuersignale SH, welche z. B. von der auch die Gasventile steuernden Steuereinrichtung SE erzeugt werden, einzeln oder gemeinsam aktiviert werden, was durch Schaltersymbole SG in den Generatorstufen angedeutet ist. Hierdurch kann vorteilhafterweise berücksichtigt werden, dass bei einer höheren Schubleistung, insbesondere bei gleichzeitigem Betrieb mehrerer Antriebseinheiten ein Parallelbetrieb beider Generatorstufen und bei niedrigerer Schubleistung ein Betrieb nur einer Generatorstufe effizienter sein kann.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Antriebsanordnung, geeignet für einen Raumflugkörper, mit mehreren Antriebseinheiten (TW1, TW2, TW3), welche einzeln und voneinander unabhängig durch eine Steuereinrichtung in ihrer Antriebsleistung veränderlich steuerbar sind, wobei die einzelnen Antriebseinheiten (TW1, TW2, TW3) jeweils eine Ionisationskammer (IK), eine Gaszuleitung (GL) und eine Elektrodenanordnung aufweisen, und mit einer Hochspannungsversorgungseinrichtung, aus welcher die einzelnen Antriebseinheiten mit Hochspannung versorgbar sind, wobei die Hochspannung in den einzelnen Antriebseinheiten ein elektrostatisches Beschleunigungsfeld für ein Plasma ausbildet, welches in einem der lonisationskammer (IK) zugeführten und dort ionisierten Arbeitsgas (AG) vorliegt, und wobei mehrre unabhängig voneinander steuerbare Antriebseinheiten (TW1, TW2, TW3) gleichzeitig aus einem gemeinsamen Hochspannungspotential der Hochspannungsversorgungseinrichtung mit Hochspannung versorgt sind und die Steuereinrich-tung (SE) zur veränderlichen Steuerung der Antriebsleistung der einzelnen Antriebseinheiten (TW1, TW2, TW3) die Erzeugung von Plasma in den Ionisationskammern (IK) ver-änderlich steuert,
**dadurch gekennzeichnet, dass** die Antriebseinheiten (TW1, TW2, TW3) in Abwesenheit von Plasma in der Ionisationskammer (IK) in ihren jeweiligen Hochspannungskreis hochohmig sind.

2. Anordnung nach Anspruch 1, **dadurch gekennzeichnet, dass** die Steuereinrichtung (SE) zur veränderlichen Steuerung der Antriebsleistung einer Antriebseinheit (TW1, TW2, TW3) den Zustrom von neutralem Arbeitsgas (AG) in die Ionisationskammer (IK) der jeweiligen Antriebseinheit (TW1, TW2, TW3) veränderlich steuert.

3. Anordnung nach Anspruch 2, **dadurch gekennzeichnet, dass** unabhängig von der veränderlichen Steuerung des Zustroms von Arbeitsgas (AG) in die Ionisationskammer (IK) einer oder mehrerer Antriebseinheiten (TW1, TW2, TW3) die Hochspannung konstant an der Elektrodenanordnung aller der mehreren Antriebseinheiten (TW1, TW2, TW3) anliegt.

4. Anordnung nach Anspruch 2 oder 3, **gekennzeichnet durch** steuerbare Gasventile (GV) in Gasleitungen (GL) zu den einzelnen Antriebseinheiten (TW1,TW2,TW3).

5. Anordnung nach Anspruch 4, **dadurch gekennzeichnet, dass** der Gasstrom kontinuierlich oder über Zwischenstufen zwischen geschlossenem Gasventil (GV) und maximal offenem Gasventil (GV) steuerbar ist.

6. Anordnung nach Anspruch 4, **dadurch gekennzeichnet, dass** zumindest ein Teil der mehreren Gasventile (GV) als Schaltventile ausgeführt sind.

7. Anordnung nach Anspruch 4, **dadurch gekennzeichnet, dass** das einer Antriebseinheit (TW1, TW2, TW3) zugeordnete steuerbare Gasventil (GV) unmittelbar bei der Antriebseinheit (TW1, TW2, TW3) angeordnet ist.

8. Anordnung nach einem der Ansprüche 1 bis 5, **dadurch gekennzeichnet, dass** in den Gaszuleitungen (GL) Flusswiderstandsanordnungen (FW) vorgesehen sind.

9. Anordnung nach einem der Ansprüche 1 bis 8, **dadurch gekennzeichnet, dass** die Antriebseinheiten (TW1, TW2, TW3) in Abwesenheit von Plasma in der Ionisationskammer (IK) in ihrem jeweiligen Hochspannungsstromkreis einen Widerstand von wenigstens 100 kOhm besitzen.

10. Anordnung nach einem der Ansprüche 1 bis 9, **dadurch gekennzeichnet, dass** eine Antriebseinheit (TW1, TW2, TW3) eine im Bereich einer Austrittsöffnung (AO) der Ionisationskammer (IK) angeordnete Kathode (KA) und eine der Austrittsöffnung (AO) entgegen gesetzt am Fuß der Ionisationskammer (IK) angeordnete Anode (AN) besitzt und die Hochspannung ein die Ionisationskammer (IK) durchsetzendes elektrostatisches Feld bewirkt.

11. Anordnung nach Anspruch 10, **dadurch gekennzeichnet, dass** die lonisationskammer (IK) von einer Magnetanordnung (MA) seitlich umgeben ist und die Magnetanordnung (MA) in der Ionisationskammer (IK) ein Magnetfeld (MF) erzeugt, welches wenigstens zwei in Längsrichtung beabstandete Cusp-Feldstrukturen aufwe ist.

12. Anordnung nach einem der Ansprüche 1 bis 10, **dadurch gekennzeichnet, dass** mehrere aus einem gemeinsamen Hochspannungspotential versorgte Antriebseinheiten (TW1, TW2, TW3) in unterschiedlicher Ausrichtung an dem Raumflugkörper angeordnet sind.

13. Anordnung nach einem der Ansprüche 1 bis 12, **dadurch gekennzeichnet, dass** verschiedene Antriebseinheiten (TW1, TW2, TW3) in fester unterschiedlicher Ausrichtung an dem Raumflugkörper angeordnet sind.

14. Anordnung nach einem der Ansprüche 1 bis 13, **dadurch gekennzeichnet, dass** zur Erzeugung eines Antriebsschubs in eine nicht mit der Ausrichtung einer Antriebseinheit (TW1, TW2, TW3) zusammenfallende Schubrichtung die Steuerung mehrere Antriebseinheiten (TW1, TW2, TW3) gleichzeitig zur Erzeugung von Antriebsleistung ansteuert.

15. Anordnung nach einem der Ansprüche 1 bis 14, **dadurch gekennzeichnet, dass** der Hochspannungsgenerator (HGP) mehrere elektrisch parallel angeordnete Generatorstufen (GS1,GS2) enthält, welche auf einen gemeinsamen Hochspannungsausgang (GA) geführt sind.

16. Anordnung nach einem der Ansprüche 1 bis 15, **dadurch gekennzeichnet, dass** ein weiterer Hochspannungsgenerator mit weiteren Antriebseinheiten vorgesehen ist und dass beide Hochspannungsgeneratoren dauerhaft und über von Schaltelementen freie elektrische Verbindungen mit den ihnen jeweils fest zugeordneten Antriebseinheiten verbunden und nicht mit dem jeweils anderen Hochspannungsgenerator zugeordneten Antriebseinheiten verbindbar sind.

## Claims

1. Drive arrangement, suitable for a spacecraft, comprising multiple drive units (TW1, TW2, TW3), which can be controlled in their drive output individually and independently of one another by a control device, the individual drive units (TW1, TW2, TW3) respectively having an ionization chamber (IK), a gas feed line (GL) and an electrode arrangement, and comprising a high-voltage supply device, from which the individual drive units can be supplied with high voltage, the high voltage forming in the individual drive units an electrostatic acceleration field for a plasma which is present in a working gas (AG) fed to the ionization chamber (IK) and ionized there, and multiple drive units (TW1, TW2, TW3) that can be controlled independently of one another being supplied with high voltage simultaneously from a common high-voltage potential of the high-voltage supply device and the control device (SE) for variably controlling the drive output of the individual drive units (TW1, TW2, TW3) variably controlling the production of plasma in the ionization chambers (IK),
**characterized in that**, in the presence of plasma in the ionization chamber (IK), the drive units (TW1, TW2, TW3) are highly resistive in their respective high-voltage circuit.

2. Arrangement according to Claim 1, **characterized in that** the control device (SE) for the variable control of the drive output of a drive unit (TW1, TW2, TW3) variably controls the inflow of neutral working gas (AG) into the ionization chamber (IK) of the respective drive unit (TW1, TW2, TW3).

3. Arrangement according to Claim 2, **characterized in that**, independently of the variable control of the inflow of working gas (AG) into the ionization chamber (IK) of one or more drive units (TW1, TW2, TW3), the high voltage is constantly present at the electrode arrangement of all of the multiple drive units (TW1, TW2, TW3).

4. Arrangement according to Claim 2 or 3, **characterized by** controllable gas valves (GV) in gas lines (GL) to the individual drive units (TW1, TW2, TW3).

5. Arrangement according to Claim 4, **characterized in that** the gas flow can be controlled continuously or through intermediate stages between a closed gas valve (GV) and a fully open gas valve (GV).

6. Arrangement according to Claim 4, **characterized in that** at least some of the multiple gas valves (GV) are designed as switching valves.

7. Arrangement according to Claim 4, **characterized in that** the controllable gas valve (GV) assigned to a drive unit (TW1, TW2, TW3) is arranged directly at the drive unit (TW1, TW2, TW3).

8. Arrangement according to one of Claims 1 to 5, **characterized in that** flow resistance arrangements (FW) are provided in the gas feed lines (GL).

9. Arrangement according to one of Claims 1 to 8, **characterized in that**, in the absence of plasma in the ionization chamber (IK), the drive units (TW1, TW2, TW3) have in their respective high-voltage circuit a resistance of less than 100 kohms.

10. Arrangement according to one of Claims 1 to 9, **characterized in that** a drive unit (TW1, TW2, TW3) has a cathode (KA) arranged in the region of an outlet opening (AO) of the ionization chamber (IK) and an anode (AN) arranged opposite the outlet opening (AO) at the foot of the ionization chamber (IK) and the high voltage brings about an electrostatic field permeating the ionization chamber (IK).

11. Arrangement according to Claim 10, **characterized in that** the ionization chamber (IK) is laterally surrounded by an arrangement of magnets (MA) and the arrangement of magnets (MA) produces in the ionization chamber (IK) a magnetic field (MF) which has at least two cusp field structures spaced apart in the longitudinal direction.

12. Arrangement according to one of Claims 1 to 10, **characterized in that** multiple drive units (TW1, TW2, TW3) supplied from a common high-voltage potential are arranged in different alignments on the spacecraft.

13. Arrangement according to one of Claims 1 to 12, **characterized in that** various drive units (TW1, TW2, TW3) are arranged in different fixed alignments on the spacecraft.

14. Arrangement according to one of Claims 1 to 13, **characterized in that**, to produce a drive thrust in a thrust direction that does not coincide with the alignment of a drive unit (TW1, TW2, TW3), the control controls multiple drive units (TW1, TW2, TW3) simultaneously to produce drive output.

15. Arrangement according to one of Claims 1 to 14, **characterized in that** the high-voltage generator (HGP) contains multiple generator stages (GS1, GS2), which are arranged electrically in parallel and are led to a common high-voltage output (GA).

16. Arrangement according to one of Claims 1 to 15, **characterized in that** a further high-voltage generator with further drive units is provided and **in that** both high-voltage generators can be connected permanently and by way of electrical connections that are free from switching elements to the drive units that are respectively fixedly assigned to them and cannot be connected to the drive units that are respectively assigned to the other high-voltage generator.

## Revendications

1. Arrangement propulseur, conçu pour un engin spatial, comprenant plusieurs unités de propulsion
(TW1, TW2, TW3) qui peuvent être commandées individuellement et indépendamment les unes des autres avec une puissance de propulsion variable par un
dispositif de commande, les unités de propulsion (TW1, TW2, TW3) individuelles présentant respectivement une chambre d'ionisation (IK), une conduite d'arrivée de gaz (GL) et un arrangement d'électrode, et comprenant une dispositif d'alimentation en haute tension à partir duquel les unités de propulsion individuelles peuvent être alimentées en haute tension, la haute tension formant dans les unités de propulsion individuelles un champ d'accélération électrostatique pour un plasma qui est présent dans un gaz de travail (AG) acheminé et ionisé dans l'une des chambres d'ionisation (IK), et plusieurs unités de propulsion (TW1, TW2, TW3) qui peuvent être commandées indépendamment les unes des autres étant alimentées simultanément à partir d'un potentiel de haute tension commun du dispositif d'alimentation en haute tension par une haute tension et le dispositif de commande (SE) de commande variable de la puissance de propulsion des unités de propulsion (TW1, TW2, TW3) individuelles commandant la génération de plasma dans la chambre d'ionisation (IK) de manière variable,
**caractérisé en ce que** les unités de propulsion (TW1, TW2, TW3), en l'absence de plasma dans la chambre d'ionisation (IK), présentent une résistance élevée dans leur circuit de haute tension correspondant.

2. Arrangement selon la revendication 1, **caractérisé en ce que** le dispositif de commande (SE) de commande variable de la puissance de propulsion d'une unité de propulsion (TW1, TW2, TW3) commande de manière variable le flux d'arrivée de gaz de travail (AG) neutre dans la chambre d'ionisation (IK) de l'unité de propulsion (TW1, TW2, TW3) correspondante.

3. Arrangement selon la revendication 2, **caractérisé en ce qu'**indépendamment de la commande variable du flux d'arrivée de gaz de travail (AG) dans la chambre d'ionisation (IK) d'une ou plusieurs unités de propulsion (TW1, TW2, TW3), la haute tension est appliquée de manière constante à l'arrangement d'électrode de la totalité des plusieurs unités de propulsion (TW1, TW2, TW3).

4. Arrangement selon la revendication 2 ou 3, **caractérisé par** des valves à gaz (GV) commandables dans les conduites de gaz (GL) vers les unités de propulsion (TW1, TW2, TW3) individuelles.

5. Arrangement selon la revendication 4, **caractérisé en ce que** le flux de gaz est commandable en continu ou par paliers intermédiaires entre la valve à gaz (GV) fermée et la valve à gaz (GV) ouverte au maximum.

6. Arrangement selon la revendication 4, **caractérisé en ce qu'**au moins une partie des plusieurs valves à gaz (GV) sont réalisées sous la forme de valves de commutation.

7. Arrangement selon la revendication 4, **caractérisé en ce que** la valve à gaz (GV) commandable associée à une unité de propulsion (TW1, TW2, TW3) est disposée directement auprès de l'unité de propulsion (TW1, TW2, TW3).

8. Arrangement selon l'une des revendications 1 à 5, **caractérisé en ce que** des arrangements de résistance au flux (FW) sont prévus dans les conduites d'arrivée de gaz (GL).

9. Arrangement selon l'une des revendications 1 à 8, **caractérisé en ce que** les unités de propulsion (TW1, TW2, TW3), en l'absence de plasma dans la chambre d'ionisation (IK), possèdent une résistance d'au moins 100 kohms dans leur circuit de haute tension correspondant.

10. Arrangement selon l'une des revendications 1 à 9, **caractérisé en ce qu'**une unité de propulsion (TW1, TW2, TW3) possède une cathode (KA) disposée dans la zone d'une ouverture de sortie (AO) de la chambre d'ionisation (IK) et une anode (AN) disposée à l'opposé de l'ouverture de sortie (AO) au pied de la chambre d'ionisation (IK) et la haute tension produit un champ électrostatique qui charge directement la chambre d'ionisation (IK).

11. Arrangement selon la revendication 10, **caractérisé en ce que** la chambre d'ionisation (IK) est entourée latéralement par un arrangement d'aimant (MA) et l'arrangement d'aimant (MA) génère dans la chambre d'ionisation (IK) un champ magnétique (MF) qui présente au moins deux structures de champ cuspidées espacées dans le sens longitudinal.

12. Arrangement selon l'une des revendications 1 à 10, **caractérisé en ce que** plusieurs unités de propulsion (TW1, TW2, TW3) alimentées à partir d'un potentiel de haute tension commun sont disposées dans des orientations différentes sur l'engin spatial.

13. Arrangement selon l'une des revendications 1 à 12, **caractérisé en ce que** différentes unités de propulsion (TW1, TW2, TW3) sont disposées selon des orientations différentes fixes sur l'engin spatial.

14. Arrangement selon l'une des revendications 1 à 13, **caractérisé en ce que** pour produire une poussée de propulsion dans une direction de poussée qui ne coïncide pas avec l'orientation d'une unité de propulsion (TW1, TW2, TW3), la commande commande plusieurs unités de propulsion (TW1, TW2, TW3) simultanément pour produire la puissance de propulsion.

15. Arrangement selon l'une des revendications 1 à 14, **caractérisé en ce que** le générateur de haute tension (HGP) contient plusieurs étages générateurs (GS1, GS2) disposés électriquement en parallèle, lesquels sont acheminés à une sortie de haute tension (GA) commune.

16. Arrangement selon l'une des revendications 1 à 15, **caractérisé en ce qu'**il existe un générateur de haute tension supplémentaire comprenant des unités de propulsion supplémentaires et **en ce que** les deux générateurs de haute tension sont reliés en permanence et par le biais de liaisons électriques exemptes d'éléments de commutation avec les unités de propulsion qui leur sont respectivement associées fixement et ne peuvent pas être reliés avec les unités de propulsion associées à l'autre générateur de haute tension respectif.
